# EUROPEAN PATENT SPECIFICATION

(11) **EP 1 240 860 B1**
(45) Date of publication and mention of the grant of the patent: **14.11.2007**
(21) Application number: 02251750.2
(22) Date of filing: 12.03.2002
(51) Int. Cl.: A47J 36/38, A47J 27/56

(54) **Cooking vessel**
Kochgefäß
Récipient de cuisson

(30) Priority: 13.03.2001 KR 2001012941; 31.01.2002 KR 2002005711
(43) Date of publication of application: 18.09.2002
(73) Proprietor: SAMSUNG ELECTRONICS CO., LTD., Suwon-si, Gyeonggi-do 442-742 (KR)
(72) Inventor: Lee, Sung-Ho, 112-102 Shinyoungtong Hyundai Apt., Hwasung City, Kyungki-do (KR); Sung, Han-Jun, 909-202, Byuckjeokgol Jungong Apt., Suwon City, Kyungki-do (KR); Kim, Chul, 607-404 Kummaeul Apt., Anyang City, Kyungki-do (KR)
(74) Representative: Geary, Stuart Lloyd

(56) References cited:
- US-A- 1 188 697
- US-A- 3 809 064
- US-A- 4 482 077

## Description

The present invention relates to a lid for a cooking vessel having an upper side and a lower side for covering a cooking vessel, a collector part on said upper side and an aperture extending between said collector part and said lower side so as to provide a communication path to the inside of a vessel closed by the lid through which vapour and steam can escape during cooking and condensed vapour and steam can flow back into a vessel covered by the lid wherein said collector part comprises the inside of a cup projecting from the top of the lid. Such a cooking vessel is known from US 4, 482,077.

There are cooking vessels such as conventional rice cookers and cooking pots which are used in cooking rice or making stew. These conventional cooking vessels are generally comprised of a cylindrical body for holding the food to be cooked and a lid. A user first puts the food to be cooked into the body, covers the body with the lid, puts the cooker on a gas range or in a microwave oven and applies heat.

When the vessel is heated, increased pressure is generated within the body which causes the lid to shake. When the lid is shaken, the food sometimes boils over. In order to enhance the taste and quality of the food, especially rice, the internal pressure in the body must be suitably maintained. However, ordinary vessels have the problem in that their lids move up and down during cooking, thereby allowing the pressure to be relieved and, as a consequence, the quality of the cooked food suffers. In addition, heating vessels such as microwave ovens, gas ranges, etc., become dirty due to boiled-over food from these conventional cooking vessels.

In an effort to solve these problems, there has been proposed a cooking vessel equipped with a lid having a through hole through which vapour and steam can escape thereby preventing the lid from moving up and down. However, it has been found that food particles escape with the steam and vapours thereby making the lid dirty.

Taking the above into consideration, there is a need for a cooking vessel which allows steam and vapour to escape without the lid becoming dirty.

A lid according to the present invention is characterised by a plurality of auxiliary apertures around said aperture for the flow of condensed vapour and steam back into a vessel covered by the lid.

Preferably, the lid has a recess in its lower side and the base of the cup projects into the recess in the lower side of the lid.

Preferably, the lid is domed. More preferably, said aperture extends between the centre of the inside of the bottom of the cup and the recess in the lower side of the lid and is accompanied by a further aperture to one side and extending between the inside of the bottom of the cup and the recess in the lower side of the lid.

According to the present invention, there is also provided a cooking vessel including a pot and a lid according to the present invention.

Alternatively, the lid is configured to rest upon the rim of the pot in use and a sealing member is affixed to the lower face of the lid to provide a seal between the lid and rim of the pot.

Embodiments of the present invention will now be described, by way of example, with reference to the accompanying drawings, in which:
Figure 1 is a side sectional view of a cooking vessel according to the present invention;
Figure 2 is a perspective view illustration of the bottom of the lid of the vessel of Figure 1; and
Figure 3 is a front view of the cooking vessel of Figure 1.

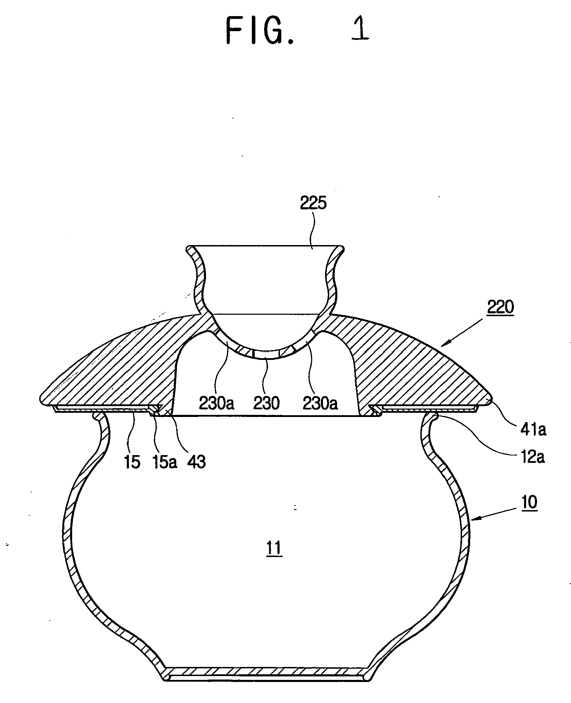

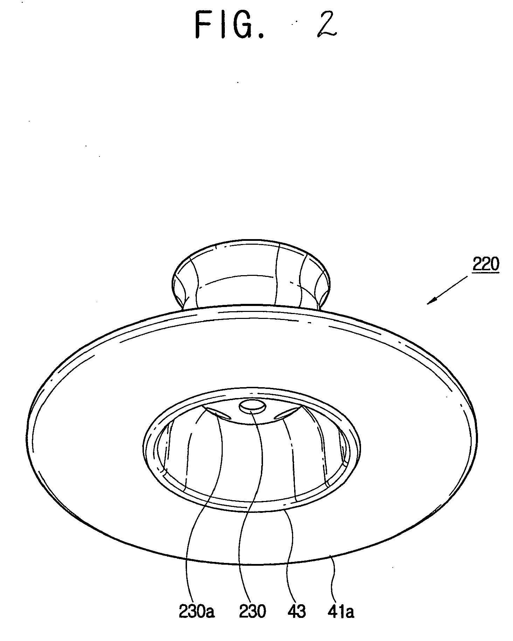

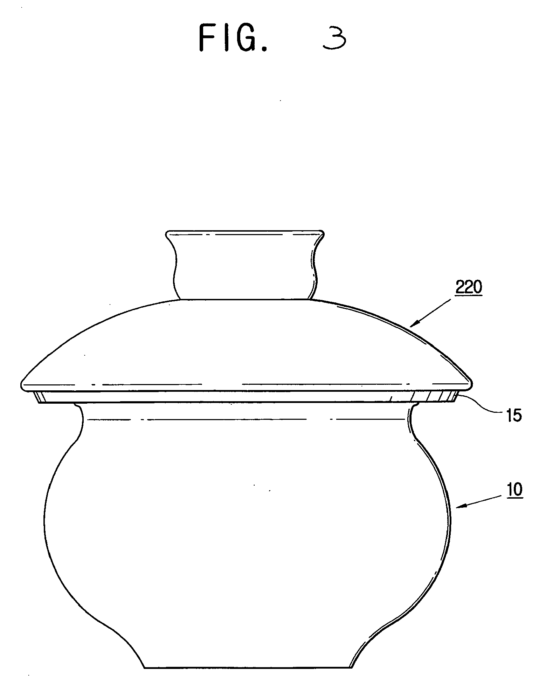

Referring to Figures 1 to 3, a cooking vessel comprises a cylindrical body 10, open at the top to provide access to an internal space 11 for placing food to be cooked therein, and a lid 220 for closing the vessel.

The body 10 may be made, e.g. by moulding, from metal or glass which are excellent materials for withstanding heat.

To more effectively prevent the movement of the lid 20 due to the pressure formed within the body 10, the lid 20 is manufactured to have an appropriate weight.

The cooking vessel according to the present invention has a collector part 225, in the form of a cup, formed in the central part of a convex lid 220. A through hole 230 communicating the inside of the body 10 with the collector part 225 opens through the bottom of the collecting part 25.

Around the central hole 230 is provided a plurality of auxiliary holes 230a and the lower face 41a of the lid 220 is in indirect contact with the lip 12a of the body 10. Also, a sealing member 15 is provided with a protruding part 15a placed between a projection 43 on the lower face 41a of the lid 220 and the lip 12a of the body 10 and is mounted to the lower face 41a of the lid 220.

With this configuration, when the body 10, loaded with food, is heated by a heating apparatus, such as a gas range or a microwave oven, to cook the food, the steam of high temperature and high pressure and condensed water formed within the body 10. discharges into the collector part 225 from the inside of the body 10 through the hole 230 thereby preventing generation of over-pressure within the body and maintaining the pressure within the body 10 at an appropriate level. Further, boiling over of the food and dissipation of the steam and condensed water is prevented. The steam and condensed water discharged from the inside of the body 10 through the hole 230 are dispersed within the collector part 225, lowering the potential of dissipating them. The discharged water moves along the inclined side wall of the collector part 225 and then flows back into the body 10 through the through hole 230. Thus, the discharge of the condensed water is prevented.

According to the present invention, when cooking rice by a cooking vessel according to the present invention, the lifting up and down of the lid is prevented and the pressure within the body is properly maintained, thereby enhancing the taste and quality of the cooked rice. This is achieved by providing a cooking vessel capable of properly discharging the steam generated with the body during cooking and collecting the condensed water back into the body.

## Claims

1. A lid (220) for a cooking vessel having an upper side and a lower side for covering a cooking vessel, a collector part (225) on said upper side and an aperture (230) extending between said collector part (225) and said lower side so as to provide a communication path to the inside of a vessel closed by the lid (220) through which vapour and steam can escape during cooking and condensed vapour and steam can flow back into a vessel covered by the lid, wherein said collector part (225) comprises the inside of a cup (225) projecting from the top of the lid **characterised by** a plurality of auxiliary apertures (230a) around said aperture (230) for the flow of condensed vapour and steam back into a vessel covered by the lid (220).

2. A lid according to claim 1 wherein the lid (220) has a recess in its lower side and the base of the cup (225) projects into the recess in the lower side of the lid (220).

3. A lid according to claim 1 or claim 2 wherein the lid (220) is domed.

4. A lid according to any of claims 2 and 3 wherein said aperture (230) extends between the centre of the inside of the bottom of the cup (225) and the recess in the lower side of the lid (220) and is accompanied by a further aperture to one side and extending between the inside of the bottom of the cup (225) and the recess in the lower side of the lid (220).

5. A cooking vessel including a pot (10) and a lid (220) according to any preceding claim.

6. A cooking vessel according to claim 5 wherein the lid (220) is configured to rest upon the rim (12a) of the pot (10) in use and a sealing member (15) is affixed to the lower face of the lid (220) to provide a seal between the lid (220) and rim (12a) of the pot (10).

## Patentansprüche

1. Deckel (220) für ein Kochgefäß mit einer Oberseite und einer Unterseite zum Abdecken eines Kochgefäßes, einem Sammelteil (225) an der Oberseite und einer Öffnung (230), die sich zwischen dem Sammelteil (225) und der Unterseite derart erstreckt, dass ein Kommunikationsweg zum Inneren eines durch den Deckel (220) verschlossenen Behälters erzeugt wird, durch den Dunst und Dampf während des Kochens entweichen und kondensierter Dunst und Dampf in ein mit dem Deckel bedecktes Gefäß zurückströmen können, wobei das Sammelteil (225) die Innenseite eines Bechers (225) aufweist, der von der Oberseite des Deckels vorsteht,
**gekennzeichnet durch**
mehrere um die Öffnung (230) angeordnete Hilfsöffnungen (230a) für den Strom des kondensierten Dunstes oder Dampfes zurück in ein mit dem Deckel (220) abgedecktes Gefäß.

2. Deckel nach Anspruch 1, wobei der Deckel (220) an seiner unteren Seite eine Aussparung aufweist, und die Basis des Bechers (225) steht in die Aussparung an der unteren Seite des Deckels (220) vor.

3. Deckel nach Anspruch 1 oder 2, wobei der Deckel (220) gewölbt ist.

4. Deckel nach Anspruch 2 oder 3, wobei sich die Öffnung (230) zwischen der Mitte des Inneren des Bodens des Bechers (225) und der Aussparung an der Unterseite des Deckels (220) erstreckt und von einer weiteren Öffnung an einer Seite begleitet wird, die sich zwischen der Innenseite des Bodens des Deckels (225) und der Aussparung an der Unterseite des Deckels (220) erstreckt.

5. Kochgefäß mit einem Topf (10) und einem Deckel (220) nach einem der vorhergehenden Ansprüche.

6. Kochgefäß nach Anspruch 5, wobei der Deckel (220) derart konfiguriert ist, dass er auf dem Rand (12a) des Topfes (10) während des Gebrauchs ruht, und dass ein Dichtungselement (15) an der unteren Fläche des Deckels (220) befestigt ist, um eine Dichtung zwischen dem Deckel (220) und dem Rand (12a) des Deckels (10) vorzusehen.

## Revendications

1. Couvercle (220) pour un récipient de cuisson comprenant un côté supérieur et un côté inférieur pour couvrir un récipient de cuisson, une partie de collecteur (225) sur ledit côté supérieur et une ouverture (230) s'étendant entre ladite partie de collecteur (225) et ledit côté inférieur de façon à fournir une voie de communication à l'intérieur d'un récipient fermé par le couvercle (220) au travers duquel la vapeur et la fumée peuvent s'évacuer pendant la cuisson et la vapeur et la fumée condensées peuvent revenir dans un récipient couvert par le couvercle, dans lequel ladite partie de collecteur (225) comprend l'intérieur d'une coupe (225) saillante depuis le sommet du couvercle, **caractérisé par** une pluralité d'ouvertures auxiliaires (230a) autour de ladite ouverture (230) pour le flux de vapeur et de fumée condensées en retour dans un récipient couvert par le couvercle (220).

2. Couvercle selon la revendication 1, dans lequel le couvercle (220) comprend un encastrement dans son côté inférieur et la base de la coupe (225) est saillante dans l'encastrement dans le côté inférieur du couvercle (220).

3. Couvercle selon la revendication 1 ou 2, dans lequel le couvercle (220) est en dôme.

4. Couvercle selon l'une quelconque des revendications 2 et 3, dans lequel ladite ouverture (230) s'étend entre le centre de l'intérieur du fond de la coupe (225) et l'encastrement dans le côté inférieur du couvercle (220) et est accompagnée par une autre ouverture sur un côté et s'étendant entre l'intérieur du fond de la coupe (225) et l'encastrement dans le côté inférieur du couvercle (220).

5. Récipient de cuisson comprenant un pot (10) et un couvercle (220) selon l'une quelconque des revendications précédentes.

6. Récipient de cuisson selon la revendication 5, dans lequel le couvercle (220) est configuré pour reposer sur la couronne (12a) du pot (10) en cours d'utilisation et un élément d'étanchéité (15) est fixé à la face inférieure du couvercle (220) pour fournir un joint entre le couvercle (220) et la couronne (12a) du pot (10).
